# EUROPÄISCHE PATENTSCHRIFT

(11) **EP 2 678 119 B1**
(45) Veröffentlichungstag und Bekanntmachung des Hinweises auf die Patenterteilung: **08.04.2015**
(21) Anmeldenummer: 11705546.7
(22) Anmeldetag: 23.02.2011
(51) Int. Cl.: A01G 25/16, F16K 11/074, F16K 31/524

(54) **WASSERVERTEILER**
WATER DISTRIBUTOR
RÉPARTITEUR D'EAU

(43) Veröffentlichungstag der Anmeldung: 01.01.2014
(73) Patentinhaber: HUSQVARNA AB, 561 82 Huskvarna (SE)
(72) Erfinder: KAUPP, Rainer, 89143 Blaubeuren (DE)
(74) Vertreter: Finkele, Rolf
(86) Internationale Anmeldenummer: PCT/EP2011/052698
(87) Internationale Veröffentlichungsnummer: WO 2012/113451

(56) Entgegenhaltungen:
- US-A- 4 796 657
- US-A- 5 944 052

## Beschreibung

Die Erfindung betrifft einen Wasserverteiler.

Zur zeitsteuerbaren Versorgung mehrerer Gartenbewässerungseinrichtungen, wie beispielsweise Viereck- oder Kreisregnern, Tropf- oder Wurzel-Bewässerungseinrichtungen oder dergleichen sind programmierbare Bewässerungscomputer in Verbindung mit Wasserverteilern bekannt. Der Wasserverteiler ist über einen Wasser-Eingangsanschluss mit dem Wasser-Ausgangsanschluss des Bewässerungscomputers verbunden und weist seinerseits mehrere Ausgänge mit jeweils einem Wasseranschluss auf. Ein Verteilerkörper ist im Gehäuse des Wasserverteilers drehbar gelagert und verbindet je nach Drehposition einen der Ausgänge wasserführend mit dem gemeinsamen Eingangsanschluss, wogegen die jeweils anderen Ausgänge gesperrt sind. Eine Fortschalteinrichtung schaltet auf ein hydraulisches Fortschaltsignal des Bewässerungscomputers den Verteilerkörper auf den nächsten Ausgang weiter. Das Fortschaltsignal des Bewässerungscomputers beinhaltet einen Druckwechsel am gemeinsamen Eingangsanschluss, insbesondere ein vorübergehendes Abschalten des Wasserzustroms durch den Bewässerungscomputer. Die Fortschalteinrichtung enthält in typischer Ausführung eine Spindel mit Wendelführung, einen in Richtung der Wendelachse in Abhängigkeit vom Wasserdruck entgegen einer Rückstellfeder verschiebbaren Kolben, welcher den Verteilerkörper bei der Drehung um die Spindelachse mitnimmt, und eine Freilaufeinrichtung. Die Wirkungsweise solcher bekannter Wasserverteiler ist allgemein bekannt.

Häufig werden nicht alle der verfügbaren Ausgänge des Wasserverteilers zur Versorgung von Bewässerungseinrichtungen benötigt. Solche Ausgänge sind nachfolgend als inaktiv bezeichnet, wogegen Ausgänge mit angeschlossenen und mit Wasser zu versorgenden Bewässerungseinrichtungen als aktiv bezeichnet werden. Inaktive Ausgänge können stromabwärts des Verteilerkörpers einzeln abgesperrt sein. Die Fortschaltung des Verteilerkörpers von einem aktuellen Ausgang auf den nächsten Ausgang erfolgt durch Abschalten der Wasserzufuhr durch den Bewässerungscomputer und Abbau des Wasserdrucks im Wasserverteiler. Während der Druckabbau an aktiven Ausgängen durch Wasserabfluss zu der angeschlossenen Bewässerungseinrichtung schnell erfolgt, ist diese Möglichkeit des Druckabbaus bei Stellungen, in welchen der aktuelle Ausgang ein abgesperrter inaktiver Ausgang ist, beschränkt. Typischerweise sind daher alle Ausgänge über enge Leckageleitungen verbunden, welche auch bei abgesperrten inaktiven Ausgängen nach Absperren der Wasserzufuhr einen Druckabbau über die aktiven Ausgänge bewirken. Für einen ausreichenden Druckabbau muss eine relativ lange Haltedauer des Absperrens der Wasserzufuhr von typischerweise 30 Sekunden bis 60 Sekunden eingehalten werden.

Durch die Leckageleitungen werden bei druckbeaufschlagtem Wasserverteiler neben dem aktuellen Ausgang auch andere aktive Ausgänge mit Wasser beaufschlagt, was insbesondere bei Bewässerungseinrichtungen mit geringem Durchfluss wie z. B. Tropfern zu einer unkontrollierten Überbewässerung führen kann.

**Das Patent** US 4 796 657 A **beschreibt einen wasserdruck- gesteuerten Wasserverteiler, der einen Mechanismus aufweist, um die über das Zu- und Abschalten gesteuerte Umschaltung zwischen den einzelnen Ausgängen zu hemmen. Auf diese Weise kann ein Nutzer einen bestimmten Ausgang unabhängig von der Variation des Wasserdrucks zur kontinuierlichen Bewässerung festlegen.**

**Bei dem mit dem Patent** US 5 944 052 A **beschriebenen Wasserverteiler sind die einzelnen Ausgänge mit über eine elektronische Steuereinheit elektrisch gesteuerten Ventilen versehen. Hierdurch wird ein von einer Änderung des Wasserdrucks unabhängiges Öffnen bzw. Schließen der unterschiedlichen Ausgänge ermöglicht.**

Der vorliegenden Erfindung liegt die Aufgabe zugrunde, einen Wasserverteiler mit zyklischer Fortschaltung eines Verteilerkörpers durch Druckwechsel zu verbessern.

Die Erfindung ist im unabhängigen Anspruch beschrieben. Die abhängigen Ansprüche enthalten vorteilhafte Ausgestaltungen und Weiterbildungen der Erfindung.

Durch die Ausbildung der Fortschalteinrichtung für unterschiedliche Schrittweiten bei der Fortschaltung des Verteilerkörpers können vorteilhafterweise inaktive Ausgänge des Wasserverteilers bei der Fortschaltung des Verteilerkörpers übersprungen werden, so dass solche inaktiven Ausgänge nicht als aktuelle Ausgänge mit dem gemeinsamen Eingangsanschluss verbunden werden. Hierdurch entfällt zum einen die Problematik des Druckabbaus an inaktiven Ausgängen über die Leckageleitungen und zum anderen die Zeitverzögerung durch den bei bekannten Wasserverteilern auftretenden Zwischenschritt an inaktiven Ausgängen. Der Verteilerkörper wird während eines Fortschaltschritts, in welchem nach Absperrung der Wasserzufuhr ein Druckabbau primär über den aktuellen Ausgang erfolgt ist in einem Zuge bis zum nächsten aktiven Ausgang fortgeschaltet, wobei der Fortschaltschritt lediglich ein Schrittinkrement zu einem direkt benachbarten aktiven Ausgang oder mehrere solcher Schrittinkremente zu einem weiter beabstandeten aktiven Ausgang ausmachen kann. Die aufeinander folgenden Fortschaltschritte können je nach Belegung der Ausgänge unterschiedliche Schrittweiten umfassen, welche sich nach einer Änderung der Belegung der Ausgänge verändern.

Die jeweils erforderlichen Schrittweiten zwischen aufeinanderfolgenden aktiven Ausgängen sind vorteilhafterweise im Verteiler vorgebbar, wofür vorteilhafterweise im Verteiler einzelnen Ausgängen zugeordnete Stellmittel vorgesehen sind, mittels welcher die jeweiligen Ausgänge für die Fortschalteinrichtung als aktiv oder inaktiv markierbar sind.

Die Stellmittel können automatisch bei Belegung eines Ausgangsanschlusses mit einer zu einer Bewässerungseinheit führenden Leitung und/oder bei Absperren eines Ausgangs als aktiv oder inaktiv einstellbar sein. Mechanisch vorteilhaft einfach sind vom Benutzer vorzugsweise manuell werkzeuglos umstellbare Stellmittel, insbesondere schwenkbare oder drehbare Stellhebel.

Unterschiedliche Schrittweiten der Fortschaltung sind vorteilhafterweise durch unterschiedliche Hubwege eines unter Einwirkung hohen Wasserdrucks während eines Bewässerungsschritts und/oder bei Druckabfall verschiebbaren Kolbens bestimmt, wobei typischerweise einem größeren Hub des Kolbens eine größere Schrittweite der Fortschaltung zugeordnet ist.

Vorteilhafterweise wirken die Stellmittel als den Verschiebeweg veränderlich begrenzende Anschläge für die Verschiebung des Kolbens und wirken mit einer Gegenstruktur, die die Verschiebung des Kolbens und die Drehung des Verteilerkörpers mitmacht, zusammen. Die Gegenstruktur ist vorteilhafterweise in Form einer in Fortschaltrichtung gestuften Steuerkurve als Folge von Gegenanschlägen ausgeführt. Eine Fortschaltung des Verteilerkörpers erfolgt vorzugsweise in der an sich bekannten Art über eine Wendelführung einer Spindel mit Freilauf. Bei gegebener Wendelsteigung ist die Winkelschrittweite einer Drehbewegung proportional zum axialen Hub des Kolbens bzw. der axial mit dem Kolben verschobenen Wendel.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Ausschnitt eines Verteilergehäuses,
- Fig. 2: einen Verteiler mit aufgeschnittenem Gehäuse,
- Fig. 3: eine andere Ansicht zu Fig. 2,

- Fig. 4: Schaltschemata mit Abwicklungen der Steuerkurve,
- Fig. 5: eine Variation zu Fig. 4.

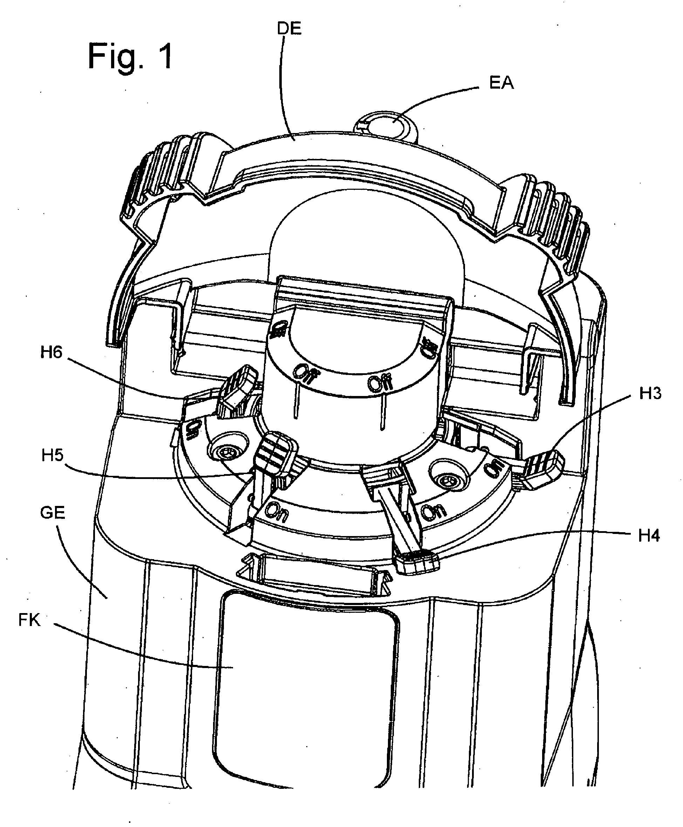

Fig. 1 zeigt in Ansicht von schräg oben den oberen Abschnitt eines Gehäuses GE eines Wasserverteilers, welcher insgesamt sechs Ausgänge besitze. Das Gehäuse weist einen für alle Ausgänge gemeinsamen Eingangsanschluss EA auf, an welchen eine Zuleitung, beispielsweise ein Schlauch, von einem Bewässerungscomputer kommend anschließbar ist.

Unter einem in Fig. 1 hochgeklappt dargestellten Deckel sind mehrere Stellhebel SH zur werkzeuglos manuellen Betätigung durch einen Benutzer angeordnet, welche zwischen zwei Stellungen verkippbar sind. Die in Fig. 1 dargestellten Stellhebel SH sind zur eindeutigen Zuordnung zu Ausgängen in der nachfolgenden Beschreibung mit Nummern H3, H4, H5 und H6 gekennzeichnet. Die Stellhebel dienen zur Markierung von zugeordneten Ausgängen als aktiv oder als inaktiv. Die Stellhebel H3 und H4 befinden sich in einer Stellung, welche der Markierung der zugeordneten Ausgänge als aktive Ausgänge entspricht. Die Stellhebel H5 und H6 befinden sich in einer Stellung, welche die zugeordneten Ausgänge als inaktive Ausgänge markiert. Am Gehäuse können Beschriftungen On für die der aktiven Markierung zugewiesene Stellung und Off für die der inaktiven Markierung zugewiesene Stellung vorgesehen sein.

Der Verteiler nach Fig. 1, für welchen sechs Ausgänge angenommen sind, weist nur vier Stellhebel auf. Zwei der sechs Ausgänge sind ohne Stellmittel dauerhaft als aktive Ausgänge markiert und können nicht als inaktive Ausgänge markiert werden. Dies trägt dem Umstand Rechnung, dass der Einsatz eines Wasserverteilers nur bei wenigstens zwei mit Bewässerungseinrichtungen belegten Ausgängen sinnvoll ist.

An dem Gehäuse GE des Wasserverteilers ist eine transparente Abdeckplatte FK als Kontrollfenster angeordnet, durch welches, wie sich aus der nachfolgenden Beschreibung noch ergibt, die aktuelle Drehposition eines Verteilers mit Zuordnung zu einem Ausgang als aktuellem Ausgang ablesen läßt. Die Abdeckplatte FK kann auch von dem Gehäuse lösbar ausgebildet sein.

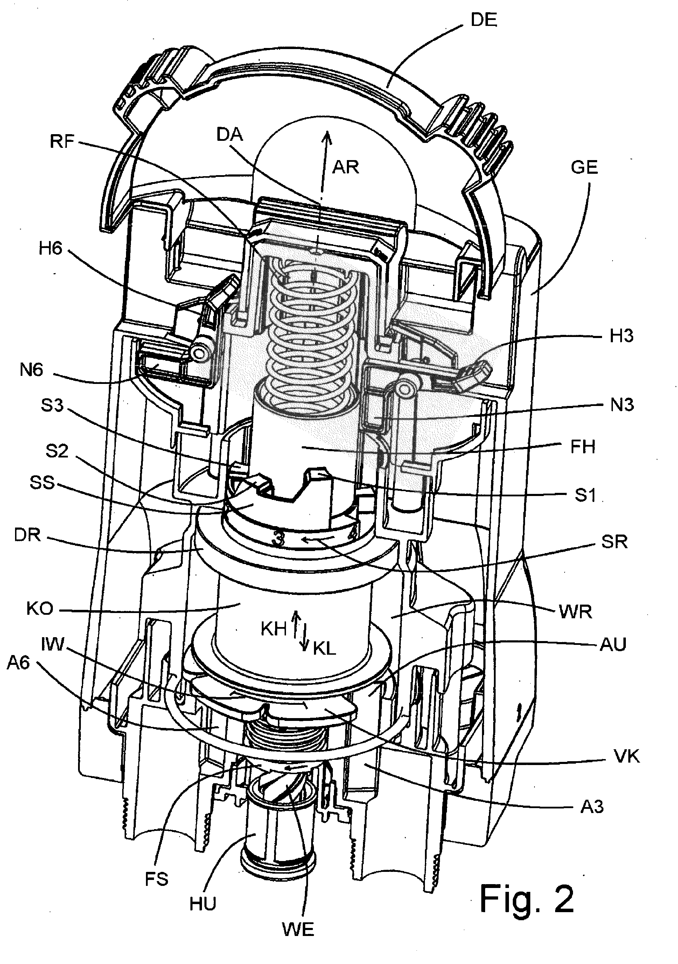

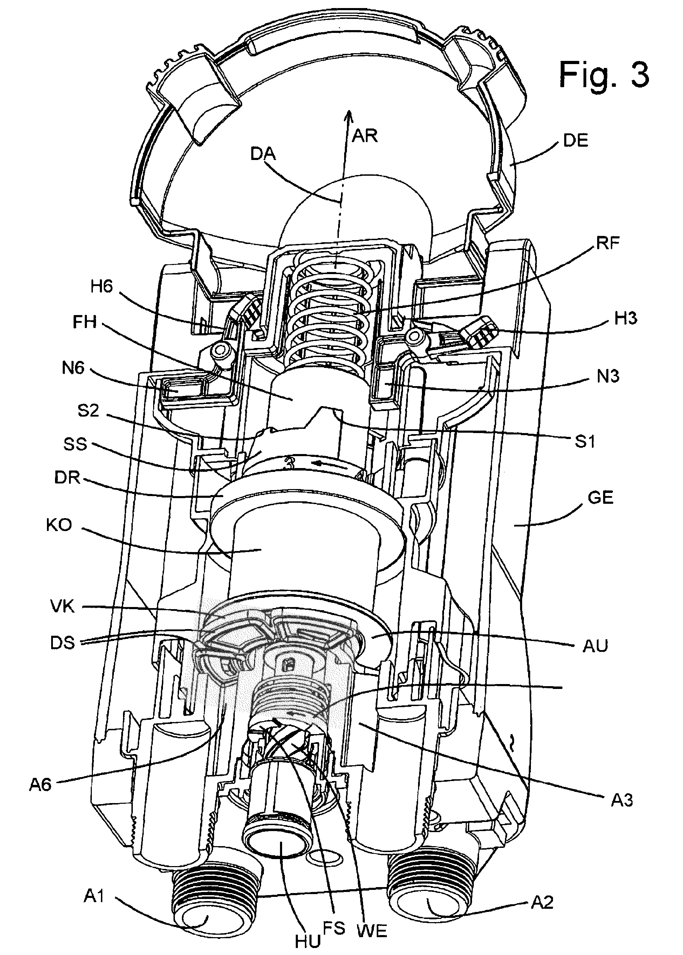

Fig. 2 und Fig. 3 zeigen aus unterschiedlichen Blickwinkeln einen Wasserverteiler der in Fig. 1 dargestellten Art mit einem aufgeschnittenen Gehäuse. In dieser Darstellung sind von den Stellhebeln nur die Hebel H3 und H6 erkennbar. Die Stellhebel sind um Hebelachsen HA schwenkbar am Gehäuse gelagert und weisen auf der bezüglich der Schwenkachsen den Griffabschnitten abgewandten Seite Anschlagnocken N3 bzw. N6 auf, welche für die Fortschalteinrichtung als Markierung eines aktiven oder eines inaktiven Ausgangs dienen. Bei dem Stellhebel H3, welcher einen Ausgang A3 als aktiv markiert, ragt der Anschlagnocken N3 parallel zu einer Drehachse DA der Fortschalteinrichtung, die nachfolgend noch im Detail beschrieben ist, in deren Richtung, in Fig. 2 also nach unten. Der Stellhebel H6 befindet sich in einer Stellung, welche den zugeordneten Ausgang A6 für die Fortschalteinrichtung als inaktiv markiert. Der Anschlagnocken N6 des Stellhebels H6 befindet sich in einer seitlich weg geschwenkten Position.

Für die Fortschalteinrichtung sei das gebräuchliche Grundprinzip mit einer um eine Drehachse DA drehbaren Spindel mit einer Wendel WE, einer in eine Richtung um die Drehachse DA drehbaren Freilaufeinrichtung und einem in Richtung der Drehachse axial verschiebbaren Kolben sowie einem Verteilerkörper übernommen. In dem Beispiel nach Fig. 2 enthält der Verteilerkörper VK einen scheibenförmigen Abschnitt, welcher in sechs gleiche Winkelsegmente unterteilt ist. Eines dieser sechs Segmente bildet eine Aussparung AU in dem Scheibenkörper und ist dem jeweils aktuellen Ausgang zugeordnet. Die anderen fünf Segmente weisen an ihren unten liegenden Scheibenflächen Dichtungen DS auf, welche mit einer in einer Ebene liegenden Gegenfläche des Gehäuses zusammen wirken, um in dem Gehäuse ausgebildete Kanäle als Ausgänge abzudichten. Der Raum oberhalb des Verteilerkörpers VK ist im Betrieb mit Wasser gefüllt und wasserführend mit dem Eingangsanschluss EA verbunden. Die Ausbildung des Verteilerkörpers mit einem scheibenförmigen Abschnitt zur Abdichtung der nicht aktuellen Ausgänge ist besonders vorteilhaft, da hierbei der in dem Innenraum WR anstehende Wasserdruck die Dichtungen DS an die Gegenfläche des Gehäuses andrückt und besonders zuverlässig abdichtet. Der Verteilerkörper ist durch die Fortschalteinrichtung um die Drehachse DA verdrehbar.

In Fig. 3 sind als vorteilhafte Weiterbildung Verschiebemittel in Form von Nocken VN an der Unterseite des scheibenförmigen Abschnitts des Verteilerkörpers VK dargestellt. Die Nocken stehen vorzugsweise in axialer Richtung nach unten über die Dichtungsanordnung hinaus und bewirken bei der Drehbewegung des Verteilerkörpers während eines Fortschaltschritts, dass der Verteilerkörper in axialer Richtung von dem die Wasserausgänge enthaltenden Gehäuseteil weg verschoben wird. Die Verschiebung ist vorteilhafterweise so groß, dass die Dichtungsanordnung DS vollständig von der dem Verteilerkörper axial gegenüber stehenden Gehäusefläche, welche mit der Dichtungsanordnung zusammenwirkenden die Dichtfläche während Bewässerungsvorgängen bildet, abgehoben wird. Die Nocken VN weisen vorteilhafterweise in Bewegungsrichtung der Fortschaltung Schrägflächen auf, welche sich an Kanten der Öffnungen der Ausgänge anlegen und an diesen entlang gleitend die axiale Verschiebung des Verteilerkörpers bewirken. Durch die axiale Verschiebung des Verteilerkörpers während eines Abschnitts der Bewegung eines lerkörpers während eines Abschnitts der Bewegung eines Fortschaltschritts wird vorteilhafterweise die Reibung während der Fortschaltung verringert und zugleich ein Reinigungseffekt erzielt, indem bei Abheben der Dichtungsanordnung von der Gegenfläche zwischen diesen durchströmendes Wasser Schmutzpartikel weg spült und hierdurch den Verschließ an Dichtungsanordnung und Gegenfläche verringert. Die Verminderung der Reibung ist insbesondere für große Schrittweiten der Fortschaltung von Vorteil.

In an sich bekannter Art enthält die Fortschalteinrichtung eine Spindel mit einer Wendel WE, welche in einer am Gehäuse befestigten Hülse HU um die Drehachse DA drehbar geführt und außerdem axial in Richtung der Drehachse DA verschiebbar ist. Die Wendel WE ist sowohl in ihrer Drehung um die Drehachse DA als auch in ihrer axialen Verschiebung in Richtung der Drehachse DA mit einem Kolben KO gekoppelt. Der Kolben KO ist in einem Ring DR axial abgestützt. Der Ring DR enthält auch eine Gleitdichtung, welche den wasserführenden Innenraum WR nach oben abdichtet. Der Kolben KO ist an seiner Oberseite durch eine Rückstellfeder RF nach unten gedrückt, welche in einer Hülse FH zentriert gehalten und an ihrem anderen Ende gegen das Gehäuse abgestützt ist.

Im Bereich der Wendel WE ist eine Scheibe FS als Teil einer Freilaufeinrichtung angeordnet und an der Wendel geführt. Die Scheibe FS weist eine sechsfache Rampenverzahnung auf, welche mit einer korrespondierenden Gegenstruktur am Gehäuse als Freilauf zusammen wirkt. Die Scheibe FS ist durch eine Feder nach unten gedrückt, kann aber für ihre Freilauffunktion bei Drehung in der durch den Pfeil angegebenen Freilauf-Drehrichtung über die Rampen der Verzahnung axial verschoben werden und so in Pfeilrichtung relativ zum Gehäuse gedreht werden. In Gegenrichtung ist eine Drehung der Scheibe FS durch die mit dem Gehäuse zusammen wirkende Verzahnung gesperrt.

In den Schnittdarstellungen nach Fig. 2 und Fig. 3 ist der Kolben in einer abgesenkten Position entsprechend einem niederen Druck im Innenraum WR gezeigt. Dies entspricht dem Zustand, wenn die Zuleitung durch den Wassercomputer abgesperrt ist. Der Verteilerkörper VK ist um die Drehachse DA drehfest mit dem Kolben KO gekoppelt und in axialer Richtung im wesentlichen unverschiebbar. Der Kolben KO ist unter Beibehaltung der Drehkopplung mit dem Verteilerkörper relativ zu diesem axial verschiebbar. In der dargestellten Drehstellung des Verteilerkörpers bildet der durch den Stellhebel H3 als aktiv markierte Ausgang A3 den aktuellen Ausgang für den folgenden Bewässerungsvorgang. Die Ziffer 3 am über dem Ring DR liegenden Umfang weist in dieser Drehstellung in Richtung des Kontrollfensters FK, so dass der Benutzer hieraus die aktuelle Drehstellung ablesen kann.

Zum Start des Bewässerungsvorgangs über den Ausgang A3 öffnet der Bewässerungscomputer ein Ventil und Wasser unter dem hohen Druck einer Wasserquelle, typischerweise wenige Bar, erhöht den Wasserdruck WR im Innenraum und verschiebt den Kolben KO entgegen der Rückstellkraft der Druckfeder RF in Pfeilrichtung KH von dem Verteilerkörper VK weg. Der Verteilerkörper wird unter der Einwirkung des Wasserdrucks gegen die Ausgänge gedrückt und dichtet alle Ausgänge außer dem aktuellen Ausgang A3 gegen den Innenraum WR ab. Der Kolben KO nimmt bei dieser axialen Verschiebung in Richtung KH die Wendel WE mit und die Scheibe FS der Freilaufeinrichtung wird um die Drehachse DA relativ zu der Wendel WE in ihrer Freilaufrichtung gedreht. Der Kolben dreht sich bei der Verschiebung in Richtung KH nicht um die Drehachse. Eine Verdrehkopplung zwischen Kolben und Verteilerkörper bleibt, z. B. durch einen in den Kolben ragenden achsnahen Abschnitt des Verteilerkörpers, erhalten. Wenn der Bewässerungsvorgang nach Ablauf der programmierten Bewässerungszeit durch den Bewässerungscomputer beendet wird, wird hierfür durch den Bewässerungscomputer die Wasserzufuhr in den Eingangsanschluss EA des Wasserverteilers unterbrochen und der Kolben KO wird durch die Rückstellfeder RF in Pfeilrichtung KL in Richtung des Verteilerkörpers VK axial verschoben. Die Wendel WE wird hierbei gleichfalls wieder mit dem Kolben KO axial verschoben. Durch die Wendelführung zwischen Wendel und Freilauf wird die Scheibe FS in eine Drehrichtung entgegen der an der Scheibe eingetragenen Pfeilrichtung gedrückt, kann sich aber wegen des Verzahnungseingriffs am Gehäuse nicht relativ zum Gehäuse verdrehen. Hierdurch wird über die Wendelführung eine Drehung der Spindel um die Drehachse erzwungen, welche auch zu einer entsprechenden Verdrehung des Kolbens KO und des Verteilerkörpers um die Drehachse führt. Durch die 6-fach-Verzahnung der Scheibe FS und der Gegenfläche am Gehäuse wird bei der Verdrehung des Verteilerkörpers immer eine von mehreren definierten Drehpositionen als Zielposition gewährleistet.

Die Hülse HU um die Wendel WE ist in Richtung der Drehachse verschiebbar am Gehäuse gehalten. Durch manuelles Eindrücken der Hülse axial in das Gehäuse kann der Verteilerkörper unabhängig von einer Wasserzufuhr weiter geschaltet werden.

Das Maß der Verdrehung des Verteilerkörpers VK beim Zurückfahren des Kolbens und der Spindel ist durch die Wendelsteigung und den axialen Verschiebeweg bestimmt.

Während bei gebräuchlichen Wasserverteilern mit einem solchen Fortschaltprinzip durch einen bei jeder Fortschaltung gleichen, durch einen festen Anschlag begrenzten Hub des Kolbens die Schrittweite der Winkelfortschaltung des Verteilerkörpers immer gleich einem Schrittinkrement IW von einem Ausgang zum nächsten Ausgang erfolgt, ist gemäß der Erfindung vorgesehen, die Schrittweite bei der Fortschaltung des Verteilerkörpers veränderlich vorgeben zu können und insbesondere Fortschaltschritte mit Schrittweiten von mehreren Schrittinkrementen in einem Zug durchführen zu können.

Hierfür ist in der dargestellten bevorzugten Ausführungsform der Hub des Kolbens veränderlich vorgebbar, wobei die Vorgabe durch die Stellhebel und deren Anschlagnocken in Zusammenwirken mit einer mit dem Kolben axial und drehend bewegten Steuerkurve als Gegenanschlag. Die Steuerkurve ist hierfür in Fortschaltrichtung um die Drehachse DA mehrfach gestuft und weist mehrere Stufen auf, von welchen die mit S1, S2 und S3 bezeichneten Anschlagstufen sichtbar sind. Den nicht als inaktiv markierbaren Ausgängen des Wasserverteilers, welche als A1 und A2 bezeichnet seien, sind feststehende Anschläge in dem Anschlagnocken N3 des dargestellten Stellhebels H3 entsprechender Axialposition zugeordnet. Diese feststehenden Anschläge sind in Fig. 2 durch die Hülse FH und die Rückstellfeder RF verdeckt.

Die Gegenanschlagsflächen der einzelnen Stufen der gestuften Steuerkurve sind von der Stufe S1 bis zu einer Stufe S5 in die Fortschaltrichtung SR bildende Umfangsrichtung um die Drehachse um gleiche Stufeninkremente monoton gestaffelt.

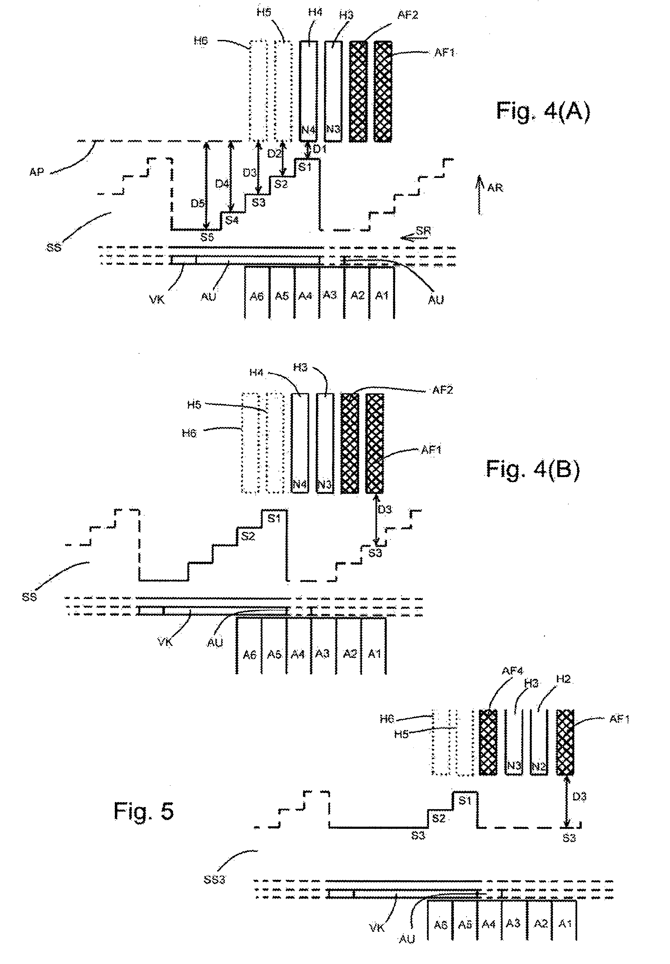

Die Funktionsweise der in den Schnittdarstellungen dargestellten bevorzugten Ausführungsform der Fortschaltungseinrichtung ist anhand von Abwicklungen der Steuerkurve SS mit Stufen S1 bis S5 und der den einzelnen Ausgängen A1 bis A6 zugewiesenen Anschlagspositionen in Fig. 4 weiter veranschaulicht. Dabei sind die Abwicklung der Steuerkurve SS und des Verteilerkörpers VK nach beiden Seiten mit unterbrochenen Linien zyklisch fortgesetzt, um immer unter den Anschlagspositionen den vollen Umfang der Steuerkurve darzustellen.

Wie aus Fig. 4 ersichtlich ist, weist die Steuerkurve SS in axialer Richtung AR fünf unterschiedliche Stufen S1 bis S5 auf. Die Steuerkurve ist in einer der Position des Kolbens in den Schnittdarstellungen entsprechenden axialen Position entsprechend abgeschalteter Wasserzufuhr dargestellt.

Von den sechs Ausgängen des Wasserverteilers seien die Ausgänge A1, A2 dauerhaft durch feste Anschläge AF1, AF2 als aktiv markiert. Ferner seien wie in Fig. 1 dargestellt die Ausgänge A3 und A4 durch die Stellhebel H3 und H4 als aktive Ausgänge markiert, wodurch die Anschlagnocken der Stellhebel H4 und H3 der Steuerkurve zuweisend positioniert und als Anschläge an den Drehpositionen der Stellhebel H3, H4 wirksam sind. Die Anschlagflächen sowohl der Festanschläge AF1, AF2 als auch der Anschlagnocken N3, N4 der Stellhebel H3 und H4 liegen in einer Ebene senkrecht zu der Drehachse DA. Ein Winkelinkrement der Fortschaltung zwischen zwei in Umfangsrichtung unmittelbar benachbarten Ausgängen ist mit IW bezeichnet.

In Fig. 4 (A) ist eine Drehstellung der Steuerkurve SS entsprechend der Drehposition in den Schnittdarstellungen mit dem Ausgang A3 als aktuellem Ausgang dargestellt. Gleichfalls mit eingetragen ist der bei der Drehung um die Drehachse DA mit der Steuerkurve gekoppelte Verteilerkörper VK mit der Aussparung AU, welche in der dargestellten Drehposition über dem Ausgang A3 liegt und hierdurch in dem folgenden Bewässerungsvorgang den Durchtritt von über den Eingangsanschluss des Wasserverteilers zugeführtem Wasser in den Ausgang A3 zuläßt, wogegen die übrigen Ausgänge in der in Fig. 4 (A) dargestellten Drehposition des Verteilerkörpers gesperrt sind.

In der dargestellten Drehstellung von Steuerkurve und Verteilerkörper steht die Gegenanschlagsstufe S1 um einen Abstand D1 dem Anschlagnocken N4 des Stellhebels H4 gegenüber. Die Abstände der Stufen S2 bis S5 der Steuerkurve von der Anschlagebene AP sind mit D2, D3, D4 und D5 bezeichnet. Die Abstände von D1 nach D5 nehmen monoton mit vorzugsweise immer gleichen Stufeninkrementen IS zwischen aufeinander folgenden Stufen zu.

Ausgehend von der den Schnittdarstellungen gezeigten Drehstellung und drucklosem Innenraum WR wird bei Start eines Bewässerungsvorgangs der Kolben samt der Steuerkurve axial von dem Verteilerkörper weg verschoben, bis die Stufe S1 an dem Anschlagnocken N4 des den Ausgang A4 als aktiv markierenden Stellhebels H4 anschlägt. Der Verschiebeweg des Kolbens ist dadurch auf den Weg D1 beschränkt, so dass auch bei der nachfolgenden Rückverlagerung des Kolbens nach Absperren der Wasserzufuhr eine axiale Rückverschiebung um dieses Maß D1 und ein dieser Axialverschiebung um D1 entsprechendes Verdrehen von Kolben, Steuerkurve und Verteilerkörper um einen zugeordneten Winkelschritt erfolgt. Dabei ist der Verschiebeweg D1 so auf die Wendelsteigung abgestimmt, dass der Verteilerkörper auf den in Fortschaltrichtung nächsten Ausgang A4 fortgeschaltet wird, wie in Fig. 4 (B) dargestellt ist.

In der in Fig. 4 (B) dargestellten Drehposition von Steuerkurve und Verteilerkörper ist durch die auf inaktive Markierung der Ausgänge A5, A6 gestellten Stellhebel H5 und H6 über den Stufen S1 und S2 kein wirksamer Anschlag gegeben. Die möglichen Anschlagpositionen sind mit punktierten Linien dargestellt. Anschläge AF1, AF2 und H3 liegen über den Stufen S3, S4 und S5 vor, wobei von diesen Stufen die Stufe S3 mit D3 den kleinsten Abstand aufweist. Bei Start des nächsten Bewässerungsvorgangs, in welchem der Ausgangs A4 als aktueller Ausgang mit Wasser beaufschlagt wird, wird der Kolben mit der Steuerkurve daher axial um den Verschiebeweg D3 verschoben, bis die Gegenanschlagsstufe S3 an dem dem Ausgang A1 zugeordneten Festanschlag AF1 anschlägt. Nach Beenden des Bewässerungsvorgangs wird daher der Kolben mit der Spindel um diesen Verschiebeweg D3 axial zurückverfahren und dabei über die Wendelführung und den sperrenden Freilauf um einen Winkelschritt fortgeschaltet, welcher dem axialen Verschiebeweg D3 entspricht. Dabei seien die Verschiebewege D2, D3, D4 und D5 so bemessen, dass ihnen bei dem Zurückfahren des Kolbens jeweils Winkelschritte von zwei, drei, vier und fünf Schrittinkrementen entsprechen, wobei ein Schrittinkrement den Winkel zwischen zwei unmittelbar aufeinander folgenden Ausgängen darstelle. Bei Beenden des Bewässerungsvorgangs auf den Ausgang A4 als aktuellen Ausgang wird somit beim Zurückfahren des Kolbens eine Verdrehung des Kolbens samt Verteilerkörper um drei Winkelelemente bewirkt, so dass danach die Aussparung AU des Verteilerkörpers über dem dauerhaft als aktiv markierten Ausgang A1 liegt und die inaktiven markierten Ausgänge A5 und A6 in einem Fortschaltschritt übersprungen werden.

Aufgrund der unmittelbar benachbarten, dauerhaft als aktiv markierten Ausgänge A1 und A2 beträgt die maximal auftretende Schrittweite der Verdrehung fünf Winkelinkremente als Fortschaltung vom Ausgang A2 direkt auf den Ausgang A1, wenn kein anderer Ausgang als aktiv markiert ist. Der in Fig. 4 unmittelbar rechts von der Stufe S1 liegende Abschnitt der Steuerkurve ist im Betrieb nicht wirksam und ist auf das Niveau der Stufe S5 gelegt.

Es läßt sich zeigen, dass die Fortschaltung mit in der beschriebenen Weise veränderlicher Winkelschrittweite bei beliebiger Stellung der Schwenkhebel immer zum jeweils nächsten aktiven Ausgang führt, indem der durch die festen oder variablen Anschläge bestimmte Verschiebeweg immer dem Winkelschritt zum nächsten als aktiv markierten Ausgang proportional entspricht.

Fig. 5 zeigt eine Variante zu Fig. 4, wobei in diesem Fall angenommen ist, dass wiederum zwei Ausgänge A1, A4 durch zugeordnete Festanschläge AF1, AF4 als dauerhaft aktiv markiert seien, wobei diese dauerhaft aktiv markierten Ausgänge A1 und A4 nun aber nicht unmittelbar benachbart, sondern um drei Winkelinkremente gegeneinander versetzt angeordnet sind. In diesem Fall beträgt die maximal auftretende Winkelschrittweite bei der Fortschaltung des Verteilerkörpers lediglich drei Winkelinkremente, wenn kein weiterer Ausgang als aktiv markiert ist. Die Steuerkurve kann in diesem Fall auf drei Stufen S1, S2, S3 beschränkt sein, welche in Umfangsrichtung aufeinander folgen. Die übrigen Abschnitte der Steuerkurve sind nicht wirksam und auf das Niveau der Stufe S3 oder tiefer gesetzt.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere kann der Verteilerkörper auch zylindrisch mit radial abgehenden Ausgängen oder auch geneigt liegenden Dichtflächen zwischen Verteilerkörper und Ausgängen ausgeführt sein. Die Komponenten der Freilaufeinrichtung können auch mit gleicher Wirkung in anderer Zusammenstellung angeordnet sein.

## Patentansprüche

1. Wasserverteiler mit einem Wassereingangsanschluss (EA) und wenigstens drei Wasserausgängen (A1 bis A6), mit einem Verteilerkörper (VK), welcher einen der Wasserausgänge mit dem Wassereingangsanschluss verbindet und schrittweise die Positionen aller Wasserausgänge durchläuft, und mit einer Fortschalteinrichtung (WE, KO, FS), welche bei Abfall des Wasserdrucks von einem oberen Druckschwellwert unter einen unteren Druckschwellwert den Verteilerkörper in einem Fortschaltschritt von einem aktuellen der Wasserausgängefortschaltet, **dadurch gekennzeichnet, dass** die Fortschalteinrichtung (WE, KO, FS) zur Fortschaltung des Verteilerkörpers (VK) um unterschiedlich vorgebbare Schrittweiten auf jeweils einen anderen Wasserausgang ausgebildet ist.

2. Wasserverteiler nach Anspruch 1, **dadurch gekennzeichnet, dass** zumindest einem Teil der Wasserausgänge (A3 bis A6) jeweils ein Stellmittel (H3 bis H6) im Wasserverteiler zugeordnet ist, mittels dessen der zugeordnete Wasserausgang als aktiv oder als inaktiv markierbar ist und dass die Fortschalteinrichtung den Verteilerkörper (VK) in einem Fortschaltschritt zum nächsten als aktiv markierten Wasserausgang fortschaltet.

3. Wasserverteiler nach Anspruch 1 oder 2, **dadurch gekennzeichnet, dass** die Fortschalteinrichtung eine Spindel mit einer Wendel (WE), einen in Richtung der Wendelachse verschiebbaren Kolben (KO) und eine mit der Wendel zusammen wirkende Freilaufeinrichtung (FS) enthält.

4. Wasserverteiler nach Anspruch 2 und 3, **dadurch gekennzeichnet, dass** Stellmittel (H3, H4), welche einen Ausgang (A3, A4) als aktiv markieren, Anschläge für die axiale Verschiebung (KH) des Kolbens (KO) bilden und mit einer mit dem Kolben verbundenen Gegenstruktur (SS) zusammenwirken.

5. Wasserverteiler nach Anspruch 4, **dadurch gekennzeichnet, dass** die Gegenstruktur eine in Fortschaltrichtung gestufte Steuerkurve (SS) als Gegenanschläge aufweist.

6. Wasserverteiler nach Anspruch 5, **dadurch gekennzeichnet, dass** ein Stufeninkrement (IS) der gestuften Steuerkurve (SS) einem Fortschaltinkrement (IW) des Verteilerkörpers (VK) zwischen aufeinander folgenden Wasserausgängen entspricht.

7. Wasserverteiler nach einem der Ansprüche 2 bis 6, **dadurch gekennzeichnet, dass** die Stellmittel als manuell betätigbare Schwenkhebel (H3 bis H6) ausgebildet sind.

8. Wasserverteiler nach Anspruch 2 bis 7, **dadurch gekennzeichnet, dass** einem Teil der Ausgänge (A1, A2) keine Stellmittel zugeordnet und diese Ausgänge dauerhaft als aktiv markiert sind.

9. Wasserverteiler nach Anspruch 8, **dadurch gekennzeichnet, dass** die dauerhaft als aktiv markierten Ausgänge (A1, A2) in Fortschaltrichtung unmittelbar aufeinander folgend angeordnet sind.

## Claims

1. Water distributor with a water inlet connection (EA) and at least three water outlets (A1 to A6), with a distributor body (VK) which connects one of the water outlets to the water inlet connection and passes through the positions of all of the water outlets step by step, and with an incremental advancing device (WE, KO, FS) which, when the water pressure drops from an upper pressure threshold value under a lower pressure threshold value, advances the distributor body in an incremental advancing step from a current water outlet of the water outlets, **characterized in that** the incremental advancing device (WE, KO, FS) is designed for advancing the distributor body (VK) by differently specifiable step sizes to another water outlet in each case.

2. Water distributor according to Claim 1, **characterized in that** at least some of the water outlets (A3 to A6) are in each case assigned a setting means (H3 to H6) in the water distributor, by means of which the assigned water outlet can be marked as active or as inactive, and **in that** the incremental advancing device advances the distributor body (VK) in an incremental advancing step to the next water outlet marked as active.

3. Water distributor according to Claim 1 or 2, **characterized in that** the incremental advancing device contains a spindle with a coil (WE), a piston (KO) displaceable in the direction of the coil axis and a freewheeling device (FS) interacting with the coil.

4. Water distributor according to Claims 2 and 3, **characterized in that** setting means (H3, H4) which mark an outlet (A3, A4) as active form stops for the axial displacement (KH) of the piston (KO) and interact with a counterstructure (SS) connected to the piston.

5. Water distributor according to Claim 4, **characterized in that** the counterstructure has a radial cam (SS), which is stepped in the incremental advancing direction, as counterstops.

6. Water distributor according to Claim 5, **characterized in that** a step increment (IS) of the stepped radial cam (SS) corresponds to an advancing increment (IW) of the distributor body (VK) between consecutive water outlets.

7. Water distributor according to one of Claims 2 to 6, **characterized in that** the setting means are designed as manually actuable pivot levers (H3 to H6).

8. Water distributor according to Claims 2 to 7, **characterized in that** some of the outlets (A1, A2) are not assigned any setting means, and said outlets are permanently marked as active.

9. Water distributor according to Claim 8, **characterized in that** the outlets (A1, A2) permanently marked as active are arranged directly consecutively in the incremental advancing direction.

## Revendications

1. Répartiteur d'eau comprenant un raccord d'entrée d'eau (EA) et au moins trois sorties d'eau (A1 à A6), comprenant un corps de répartition (VK), lequel relie l'une des sorties d'eau au raccord d'entrée d'eau et passe graduellement par les positions de toutes les sorties d'eau, et comprenant un dispositif de commutation (WE, KO, FS), lequel commute le corps de répartition dans une étape de commutation à partir d'une sortie actuelle des sorties d'eau lors de la diminution de la pression d'eau à partir d'une valeur seuil de pression supérieure jusqu'en dessous d'une valeur seuil de pression inférieure, **caractérisé en ce que** le dispositif de commutation (WE, KO, FS) est réalisé pour la commutation du corps de répartition (VK), par des incréments pouvant être prédéfinis différemment, à une autre sortie d'eau respective.

2. Répartiteur d'eau selon la revendication 1, **caractérisé en ce qu'**un moyen de réglage (H3 à H6) respectif dans le répartiteur d'eau est associé à au moins une partie des sorties d'eau (A3 à A6), au moyen duquel moyen de réglage la sortie d'eau associée peut être marquée comme étant active ou comme étant inactive, et **en ce que** le dispositif de commutation commute le corps de répartition (VK) dans une étape de commutation jusqu'à la sortie d'eau suivante marquée comme étant active.

3. Répartiteur d'eau selon la revendication 1 ou 2, **caractérisé en ce que** le dispositif de commutation comporte une broche pourvue d'une hélice (WE), un piston (KO) pouvant être déplacé dans la direction de l'axe d'hélice et un dispositif de roue libre (FS) coopérant avec l'hélice.

4. Répartiteur d'eau selon les revendications 2 et 3, **caractérisé en ce que** des moyens de réglage (H3, H4) qui marquent une sortie (A3, A4) comme étant active forment des butées pour le déplacement axial (KH) du piston (KO) et coopèrent avec une structure conjuguée (SS) reliée au piston.

5. Répartiteur d'eau selon la revendication 4, **caractérisé en ce que** la structure conjuguée comprend, en tant que butées conjuguées, une courbe de commande (SS) étagée dans la direction de commutation.

6. Répartiteur d'eau selon la revendication 5, **caractérisé en ce qu'**un incrément de pas (IS) de la courbe de commande (SS) étagée correspond à un incrément de commutation (IW) du corps de répartition (VK) entre des sorties d'eau successives.

7. Répartiteur d'eau selon l'une quelconque des revendications 2 à 6, **caractérisé en ce que** les moyens de réglage sont réalisés sous forme de leviers pivotants (H3 à H6) pouvant être actionnés manuellement.

8. Répartiteur d'eau selon les revendications 2 à 7, **caractérisé en ce qu'**aucun moyen de réglage n'est associé à une partie des sorties (A1, A2) et ces sorties sont marquées de manière permanente comme étant actives.

9. Répartiteur d'eau selon la revendication 8, **caractérisé en ce que** les sorties (A1, A2) marquées de manière permanente comme étant actives sont disposées de manières directement successive dans la direction de commutation.
